# EUROPÄISCHE PATENTSCHRIFT

(11) **EP 2 008 535 B1**
(45) Veröffentlichungstag und Bekanntmachung des Hinweises auf die Patenterteilung: **18.04.2012**
(21) Anmeldenummer: 08075582.0
(22) Anmeldetag: 25.06.2008
(51) Int. Cl.: A24C 5/35, B65G 43/08

(54) **Verfahren zum Regeln eines aus Artikeln der Tabak verarbeitenden Industrie gebildeten Förderstroms zwischen einem Schragenentleerer und einer Sendeeinrichtung mit mehreren Sendemodulen**
Method for regulating a supply flow made up of tobacco industry articles between a trays unloading station and a sending device with multiple sending modules
Procédé de réglage d'un flux d'acheminement formé à partir d'articles de l'industrie de traitement du tabac entre un videur de combles et un dispositif d'émission doté de plusieurs modules d'envoi

(30) Priorität: 26.06.2007 DE 102007030049
(43) Veröffentlichungstag der Anmeldung: 31.12.2008
(73) Patentinhaber: Hauni Maschinenbau AG, 21033 Hamburg (DE)
(72) Erfinder: Kluwe, Sven, 21035 Hamburg (DE)
(74) Vertreter: Stork Bamberger

(56) Entgegenhaltungen:
- EP-A- 0 136 827
- WO-A-2004/082410
- DE-A1- 3 333 859
- DE-A1- 3 611 707
- DE-A1- 4 118 267
- GB-A- 2 157 252
- US-A- 4 555 011

## Beschreibung

Die Erfindung betrifft ein Verfahren zum Regeln eines aus Artikeln der Tabak verarbeitenden Industrie gebildeten Förderstroms zwischen mindestens einem Schragenentleerer und mindestens einer über ein Förderelement zum Fördern eines Massenstroms aus Artikeln mit dem oder jedem Schragenentleerer verbundenen Sendeeinrichtung, wobei die Sendeeinrichtung mindestens eine zur Aufnahme der Artikel ausgebildete Kammer aufweist und jede Kammer mindestens zwei unabhängig voneinander laufende Sendemodule zum Senden der Artikel an nachgeordnete Vorrichtungen aufweist, wobei jedes Sendemodul eine individuelle Sendeleistung (P₁, P₂,...Pₙ) aufweist, mit den Schritten: Überwachen der Füllstandsmenge innerhalb der Sendeeinrichtung mittels Überwachungselementen, Senden eines Signals an jeden Schragenentleerer zur Regelung der Transportgeschwindigkeit des Förderelementes und damit der Fördermenge (in Artikel/min) in Abhängigkeit der aktuellen Füllstandsmenge innerhalb der Sendeeinrichtung, und Anpassen der Transportgeschwindigkeit an die gewünschte Füllstandsmenge. Des Weiteren betrifft die Erfindung eine Anordnung zum Überführen von stabförmigen Artikeln der Tabak verarbeitenden Industrie an nachgeordnete Vorrichtungen, umfassend mindestens einen Schragenentleerer, mindestens eine Sendeeinrichtung, wobei die Sendeeinrichtung mindestens eine zur Aufnahme der Artikel ausgebildete Kammer aufweist und jeder Kammer mindestens zwei Sendemodule zugeordnet sind, wobei jeder Schragenentleerer und die Sendeeinrichtung über ein Förderelement miteinander verbunden sind und jeweils eine Steuerung zum Regeln des Förderelementes aufweisen.

Solche Verfahren und Vorrichtungen kommen insbesondere in der Tabak verarbeitenden Industrie zum Einsatz. Dabei werden vorzugsweise stabförmige Artikel, wie z.B. Filterstäbe oder dergleichen, verarbeitet. Insbesondere werden diese Artikel häufig in Behältern, den so genannten Schragen, oder anderweitig bevorratet oder zwischengespeichert. Die der Sendeeinrichtung zugeführten Artikel werden dann von dieser vorzugsweise pneumatisch an nachgeordnete Vorrichtungen gesendet. Dazu weist die Sendeeinrichtung mindestens zwei, vorzugsweise jedoch mehrere Sendemodule auf, mittels der die Artikel in Abhängigkeit der individuellen Sendeleistung verschickt werden. Um diese Sendeeinrichtung nunmehr mit Artikeln zu versorgen, werden die Artikel aus den Schragen oder dergleichen in den Schragenentleerer überführt und vom Schragenentleerer über das Förderelement wird der aus den Artikeln gebildete Massenstrom zur Sendeeinrichtung transportiert. Der Massenstrom strömt im Bereich eines Einlaufs in das Magazin der Sendeeinrichtung. Die vorzugsweise innerhalb des Magazins angeordneten Überwachungselemente erfassen die aktuelle Füllstandshöhe innerhalb des Magazins. Anhand der von den Überwachungselementen aufgenommenen Informationen wird die Transportgeschwindigkeit des Förderelementes und damit die Fördermenge an Artikeln geregelt.

In der Praxis bedeutet dies, dass der Signalaustausch üblicherweise über zwei Signale realisiert wird, mit deren Hilfe sich lediglich drei unterschiedliche Zustände für das Förderelement abbilden lassen, nämlich z.B. a) transportiere keine Artikel, b) transportiere 100% Artikel und c) transportiere mehr als 100% Artikel. Dieses Verfahren weist jedoch den Nachteil auf, dass nur eine ungleichmäßige Versorgung des Magazins der Sendeeinrichtung mit einer wechselnden Füllstandsmenge innerhalb des Magazins realisierbar ist. Anders ausgedrückt wird das Magazin der Sendeeinrichtung nur zyklisch mit Artikeln versorgt, wobei die Befüllung des Magazins ausschließlich vom Füllstand des Magazins abhängt. Das abwechselnde Anschalten und Abschalten des Förderelementes, einhergehend mit der Unterbrechung des Artikelstroms in die empfangende Einrichtung führt zu einem so genannten Stop-and-Go-Betrieb. Das Dokument DE 33 33 859 A1 aus dem Hause der Anmelderin zeigt eine Speicheranordnung und ein entsprechendes Verfahren mit den Merkmalen der Oberbegriffe der unabhängigen Ansprüche 1 und 19. Die darin gezeigte Anordnung weist einen Aufnahmeraum innerhalb der Sendeeinrichtung auf, dessen Füllstand durch Fühlmittel überwacht wird. In Abhängigkeit der Informationen der Fühlmittel wird der Zuförderer zum Zuführen von Artikeln eingeschaltet oder abgeschaltet. Eine vergleichbare Anordnung ist der ebenfalls aus dem Hause der Anmelderin stammenden DE 36 11 707 A1 zu entnehmen, wobei der Vorratsbehälter der Sendeeinrichtung zwei Kammern aufweist. In jede Kammer mündet ein Zufördermittel. Die über das jeweilige Zufördermittel in die Kammer geführten Artikel werden über jeder Kammer zugeordnete Auslassschächte abgeführt. Aus der DE 35 38 660 C2 ist eine Signalübertragung bekannt, bei der in Abhängigkeit des Füllstands einer empfangenden Einrichtung die Zufuhr der Artikel zu dieser Einrichtung geregelt wird. Die Fördermenge wird dadurch geregelt, dass der Förderstrom für ein Zeitintervall unterbrochen wird, um dann für ein Zeitintervall wieder eingeschaltet zu werden.

Es ist daher Aufgabe der vorliegenden Erfindung, ein Verfahren vorzuschlagen, das eine gleichmäßige Versorgung des Magazins mit einer im Wesentlichen konstanten Füllstandsmenge gewährleistet. Des Weiteren ist es Aufgabe der Erfindung, eine Anordnung zur Durchführung des Verfahrens vorzuschlagen.

Diese Aufgabe wird zum einen durch ein Verfahren mit den eingangs genannten Schritten dadurch gelöst, dass die Transportgeschwindigkeit jedes einem Schragenentleerer zugeordneten Förderelementes zusätzlich zur Abhängigkeit der aktuellen Füllstandsmenge innerhalb einer Kammer auch in Abhängigkeit der aus der Summe der einzelnen Sendeleistungen (P₁, P₂,...P ₙ) aller einer Kammer zugeordneten Sendemodule gebildeten Sendeleistung (P_{gesamt}) geregelt wird. Damit wird auf überraschend einfache und exakte Weise erreicht, dass die jeweils aktuellen und individuellen Sendeleistungen der Sendemodule bekannt sind, so dass in Kombination mit der Füllstandsmenge innerhalb des Magazins der Sendeeinrichtung eine konstante Füllstandsmenge erzielt wird. Da die jederzeit aktuelle Abnahmemenge durch die Sendemodule bei der Regelung des Förderstroms Berücksichtigung findet, kann das Förderelement derart geregelt werden, dass das Niveau der Artikel in dem Magazin bzw. in den einzelnen Kammern, also die Füllstandsmenge jeweils konstant bleibt.

Eine zweckmäßige Weiterbildung der Erfindung sieht vor, dass die Transportgeschwindigkeit des Förderelementes kontinuierlich geregelt wird. Unter kontinuierlich wird verstanden, dass die Zyklen der Abfrage des jeweiligen Bedarfs kleiner/kürzer sind als die Reaktionszeit des Förderelementes. Anders ausgedrückt erfolgt die Abfrage des jeweiligen Bedarfs zwar zyklisch, das Förderelement transportiert jedoch kontinuierlich die Artikel vom Schragenentleerer zur Sendeeinrichtung. Damit kann quasi on-line der jeweils aktuelle Bedarf an Artikeln ermittelt und entsprechend nachgeregelt werden.

Vorteilhafterweise erfolgt die Signalübertragung durch Pulsweitenmodulation, die besonders unempfindlich gegenüber Störungen ist und auch über längere Distanzen eine stabile Übertragung ermöglicht.

Ein bevorzugtes Verfahren ist dadurch gekennzeichnet, dass die Pulsweite eine Funktion der Fördermenge ist. Anders ausgedrückt gibt die Länge der Signale Aufschluss über einen tatsächlichen Wert der zu fördernden Artikel. Konkret kann das beispielsweise bedeuten, dass ein Signal der Länge 100...299ms einer Menge von 5000 Artikel/min entspricht. Mit anderen Worten beinhalten die Signale nicht nur die Information, dass Artikel benötig werden, sondern liefern parallel die Information, welche konkrete Menge benötigt wird. Dadurch ist es möglich, das Niveau innerhalb des Magazins nahezu konstant zu halten.

Vorzugsweise verhält sich die Pulsweite umgekehrt proportional zur Fördermenge. Ein kurzes Signal entspricht einer großen Menge (viele Artikel/min) und ein langes Signal entspricht einer kleinen Menge (wenige Artikel/min). Damit wird sichergestellt, dass im Falle eines hohen Bedarfs an Artikeln eine sehr schnelle Information (kurzes Signal) geliefert wird, während bei geringerem Bedarf eine langsamere Information (langes Signal) ausreicht.

Zum anderen wird die Aufgabe auch durch eine Anordnung mit den eingangs genannten Merkmalen dadurch gelöst, dass die Steuerung der Sendeeinrichtung einen Summierer zum Bilden einer Sendeleistung P_{gesamt} aus den einzelnen Sendeleistungen aller einer Kammer zugeordneten Sendemodule umfasst. Die sich daraus ergebenden Vorteile wurden bereits im Zusammenhang mit dem weiter oben beschriebenen Verfahren genannt, so dass zur Vermeidung von Wiederholungen auf die entsprechenden Passagen verwiesen wird.

Weitere bevorzugte oder zweckmäßige Weiterbildungen und Merkmale der Erfindung ergeben sich aus den Unteransprüchen und der Beschreibung. Das Verfahren sowie die Anordnung werden anhand der beigefügten Zeichnung näher erläutert. In der Zeichnung zeigt:
- Fig. 1: eine schematische Darstellung der Anordnung mit einem Schragenentleerer und einer über ein Förderelement mit dem Schragenentleerer verbundenen Sendeeinrichtung, und
- Fig. 2: ein schematisches Schaltbild der miteinander verknüpften Steuerungen des Schragenentleerers einerseits und der Sendeeinrichtung andererseits.

Das im folgenden beschriebene Verfahren mit der korrespondierenden Anordnung dient zum Regeln eines aus Filterstäben gebildeten Förderstroms von einem Schragenentleerer an eine Sendeeinrichtung. Selbstverständlich können mittels des Verfahrens auch Förderströme mit anderen Artikeln und zwischen anderen Vorrichtungen, Einrichtungen Maschinen etc. geregelt werden.

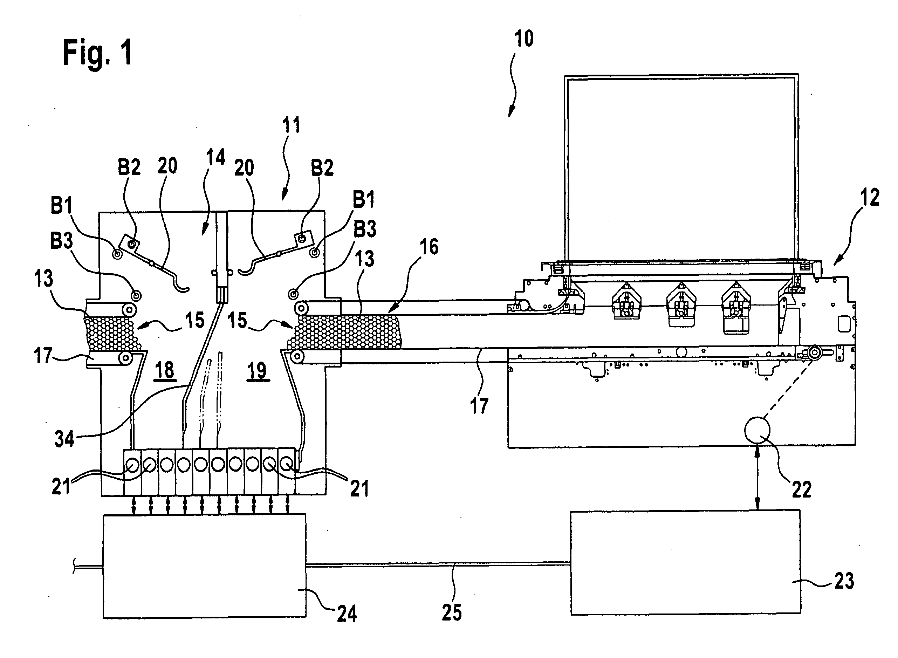

In der Figur 1 ist schematisch ein Teil einer ersten Anordnung 10 gezeigt. Die Anordnung 10 umfasst vollständig eine Sendeeinrichtung 11, die von zwei Schragenentleerem 12 mit Artikeln 13 versorgt wird. Für diese Anordnung 10 ist das weiter unten beschriebene Verfahrensprinzip besonders effektiv und wirkungsvoll. Gezeigt ist der Einfachheit halber nur einer der Schragenentleerer 12. Die Sendeeinrichtung 11 weist ein z.B. durch eine Trennwand 34 oder dergleichen geteiltes Magazin 14 auf, das beidseitig einen Einlauf 15 für den aus den Artikeln 13 gebildeten Massenstrom aufweist. Selbstverständlich kann die Anordnung 10 auch nur aus einer Sendeeinrichtung 11 und einem Schragenentleerer 12 bestehen. Andere Ausführungsformen weisen einen einzelnen Schragenentleerer 12 auf, der zwei oder mehr Sendeeinrichtungen 11 versorgt. Auch kann die Sendeeinrichtung 11 ein ungeteiltes Magazin 14 aufweisen. Die oder jede Sendeeinrichtung 11 ist mit dem oder jedem Schragenentleerer 12 über ein Förderelement 17 verbunden. Das Förderelement 17, das bevorzugt als Bandförderer ausgebildet ist, dient zum Fördern/Transportieren des Massenstroms 16 in das Magazin 14 der oder jeder Sendeeinrichtung 11.

Innerhalb des Magazins 14 sind mehrere Überwachungselemente angeordnet. In jeder Kammer 18, 19 des Magazins 14 sind vorzugsweise drei Überwachungselemente B1, B2 und B3 angeordnet. Die Anzahl der Überwachungselemente B1, B2, B3 kann selbstverständlichen ebenso variieren wie deren Position. Vorzugsweise sind zwei Überwachungselemente B1 und B2 dazu ausgebildet und eingerichtet, das Niveau der Artikel 13 innerhalb des Magazins 14 bzw. in jeder Kammer 18, 19 des Magazins 14 zu überwachen. Anders ausgedrückt überwachen die Elemente B1 und B2 den Füllstand innerhalb des Magazins 14. Die Überwachungselemente B1, B2 können z.B. als Näherungsschalter ausgebildet sein, die über einen Hebel 20, der das Niveau abtastet, aktiviert werden. Selbstverständlich können die Überwachungselemente B 1 und B2 auch als optische Elemente oder in anderer üblicher Weise ausgebildet sein. Entsprechendes gilt für das Überwachungselement B3, das im Bereich des Einlaufs 15 das Niveau überwacht.

Die Sendeeinrichtung 11 weist mehrere Sendemodule 21 auf, die üblicherweise unterhalb des Magazins 14 angeordnet sind. Die Anzahl der Sendemodule 21 beträgt mindestens zwei, bevorzugt zehn. Die Anzahl der Sendemodule 21 kann aber auch eine beliebige andere Größe aufweisen. Insbesondere ist bei einem so genannten geteilten Magazin 14 eine variable Zuordnung der Sendemodule 21 zu den Kammern 18, 19 vorgesehen. Im Falle eines ungeteilten Magazins 14 sind alle Sendemodule 21 der einzigen Kammer zugeordnet. Im gezeigten Beispiel sind jeder Kammer 18, 19 Sendemodule 21 zugeordnet. Rein beispielhaft sind der Kammer 18 drei Sendemodule 21 und der Kammer 19 sieben Sendemodule 21 zugeordnet. Mittels der Sendemodule 21 werden die Artikel aus dem Magazin 14 entnommen und vorzugsweise pneumatisch an eine nachgeordnete Empfangsstation gesendet. Die Sendemodule 21 arbeiten auch innerhalb einer Kammer 18, 19 jeweils unabhängig voneinander. Das bedeutet auch, dass jedes Sendemodul 21 eine individuelle Sendeleistung aufweisen kann, die üblicherweise zwischen 0 bis 1500 Artikel/min beträgt. Andere Sendeleistungen sind jedoch ebenfalls möglich. Die jeweilige Sendeleistung wird wahlweise von einem Bediener oder über eine Signalleitung von der entsprechenden Empfangsstation vorgegeben. Ein bevorzugtes Verfahren zur Vorgabe der Sendeleistung ist in der eingangs erwähnten DE 35 38 660 C2 beschrieben.

Der Schragenentleerer 12 ist in üblicher Weise aufgebaut, so dass auf eine detaillierte Beschreibung verzichtet wird. Das jedem Schragenentleerer 12 zugeordnete Förderelement 17 ist über einen Motor 22 umlaufend angetrieben. Dem Schragenentleerer 12 ist eine Steuerung 23 zugeordnet, mittels der insbesondere der Motor 22 regelbar ist. Anders ausgedrückt dient die Steuerung 23 vorzugsweise dazu, die Transportgeschwindigkeit des Förderelementes 17 zu regeln. Auch der Sendeeinrichtung 11 ist eine Steuerung 24 zugeordnet, die mit der Steuerung 23 über Leitungen 25 oder per Funk miteinander in Wirk- bzw. Kommunikationsverbindung steht. An die Steuerung 24 der Sendeeinrichtung 11 sind neben den Überwachungselementen B1, B2, B3 auch die Sendemodule 21 angeschlossen.

Der Einfachheit halber ist nachfolgend der Steuerungsanteil der Steuerung 24 für die Signalverarbeitung der Kammer 19 dargestellt. Der Steuerungsanteil für die Kammer 18 ist, wenn vorhanden, entsprechend aufgebaut. Die Steuerung 24 der Sendeeinrichtung 11 umfasst einen Summierer 26, der die einzelnen individuellen Sendeleistungen P₁ bis Pₙ der Sendemodule 21 der Kammer 19 zur Bildung der gesamten Sendeleistung P_{gesamt}, also der aktuellen Abnahmemenge von der Sendeeinrichtung 11, addiert. Konkret werden am gezeigten Beispiel die Sendeleistungen P₄ bis P₁₀ aufaddiert. Des Weiteren weist die Steuerung 24 mehrere, vorzugsweise zwei Umschalter 27, 28 auf, mittels denen in Abhängigkeit der Überwachungselemente B1, B2, B3 zwischen unterschiedlichen Signalleitungen hin und her geschaltet werden kann. Ein weiterer Summierer 29 zur Bildung einer Differenz (in Abhängigkeit des Vorzeichens durch Addieren oder Subtrahieren) sowie ein Wandler 30 zum Wandeln einer Größe (z.B. Artikel/min = A/min) in ein Signal sind ebenfalls Bestandteil der Steuerung 24. Die Steuerung 23 des Schragenentleerers 12 umfasst einen Wandler 31 zum Wandeln eines Signals in eine Größe (z.B. Artikel/min), einen Summierer 32 zur Bildung einer Differenz (in Abhängigkeit des Vorzeichens durch Addieren oder Subtrahieren) sowie einen weiteren Wandler 33 zum Wandeln einer Größe (z.B. Artikel/min) in eine andere Größe (z.B. Umdrehung/min = U/min).

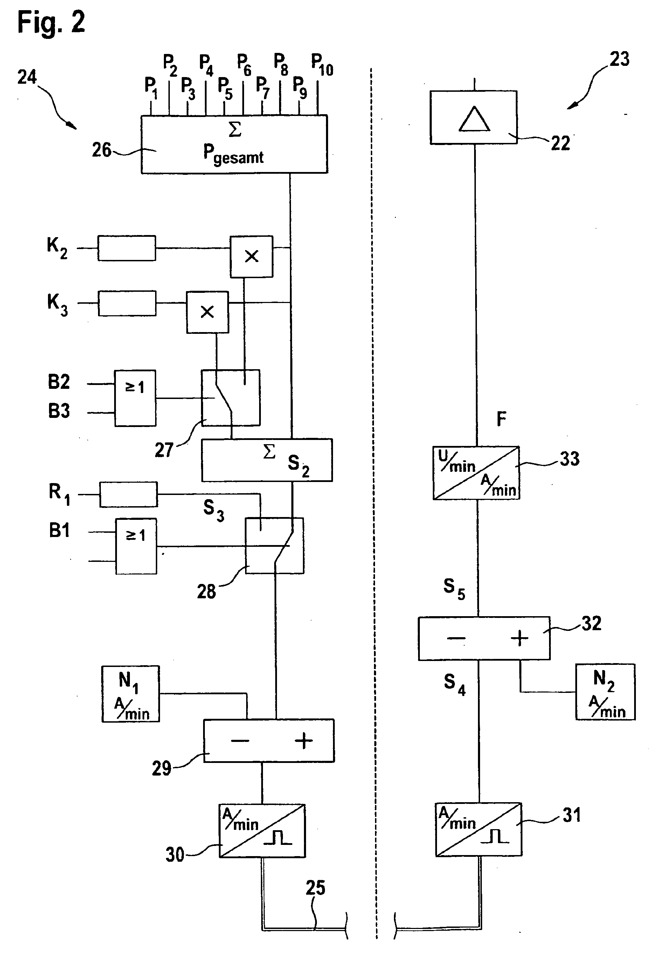

Im folgenden wird das Verfahren anhand der Figur 2 näher beschrieben:
Während der Produktion der der Anordnung 10 nachgeordneten Vorrichtungen entnehmen Sendetrommeln der Sendemodule 21 eine ständig wechselnde und von Sendemodul 21 zu Sendemodul 21 unterschiedliche Menge an Artikeln 13 aus dem Magazin 14. Der Summierer 26 addiert die einzelnen Sendeleistungen P₁ bis Pₙ, im vorliegenden Fall P₁ bis P₃ für die Kammer 18 und P₄ bis P₁₀ für die Kammer 19, zu einer gesamten Sendeleistung P_{gesamt} (z.B. in Artikel/min) für jede Kammer 18, 19. Für den Fall, dass die Sendevorrichtung 11 nur eine einzige Kammer aufweist, werden die Sendeleistungen aller Sendemodule 21 aufaddiert. Im vorliegenden Fall mit einer zwei Kammern 18, 19 umfassenden Sendeeinrichtung 11 ergeben sich für jede Kammer 18, 19 unabhängig voneinander kammerbezogenen gesamte Sendeleistungen. Diese für jede Kammer 18, 19 ermittelte Menge/Summe wird in Abhängigkeit der Füllmenge entsprechend des Zustandes der Überwachungselemente B2 und B3 korrigiert. Die Korrektur erfolgt bevorzugt dadurch, dass die gesamte Sendeleistung P_{gesamt} in Abhängigkeit der Überwachungselemente B2 und B3, die permanent die Füllstandsmenge innerhalb des Magazins 14 überwachen, mit einem Korrekturfaktor K₂ oder K₃ multipliziert wird. Dabei überwacht das Überwachungselement B2 eine definierte Füllstandsmenge, die unterhalb der maximalen Füllstandsmenge liegt, die durch das Überwachungselement B1 überwacht wird. Das Überwachungselement B3 überwacht die Füllstandsmenge im Bereich des Einlaufs 15. Alternativ kann zu der durch den Summierer 26 ermittelten Menge/Summe auch eine Summe addiert oder subtrahiert werden. Die sich aus der Multiplikation bzw. der Addition/Subtraktion ergebende Summe ist die Summe S₂.

Konkret bedeutet dies, dass die Sendeleistung P_{gesamt} um einen definierten Wert erhöht wird. Anders ausgedrückt ist die Summe S₂ grundsätzlich größer als die Sendeleistung P_{gesamt}. Wenn aber eines der beiden Überwachungselemente B2 oder B3 anzeigt, dass der überwachte Füllstand erreicht ist, wird der Umschalter 27 umgelegt, so dass im folgenden die Sendeleistung P_{gesamt} um einen definierten Korrekturwert reduziert wird, so dass dann die Summe S₂ kleiner ist als die Sendeleistung P_{gesamt}. Die Summe S₂ wird anschließend an den Summierer 29 weitergeleitet. Für den Fall, dass das Überwachungselement B 1 anzeigt, dass die maximale Füllstandsmenge innerhalb des Magazins 14 erreicht ist, wird der Schalter 28 umgelegt, so dass die Summe S₂ wahlweise durch eine Summe S₃ ersetzt wird, die deutlich geringer ist als die Summe S₂, oder mit einem Reduktionsfaktor R₁ multipliziert wird, wobei die Multiplikation ebenfalls die Summe S₃ ergibt.

Je nach Stellung des Schalters 28 wird die Summe S2 bzw. S3 vom Summierer 29 unter Einbeziehung der unmittelbar zuvor errechneten Fördermenge N1 bearbeitet. Anders ausgedrückt errechnet der Summierer 29 durch Addition oder Subtraktion die Differenz zwischen der zuletzt errechneten Fördermenge N₁ (in Artikel/min) und der aktuellen, neuen Fördermenge, die durch die Summe S₂ bzw. S₃ (ebenfalls in Artikel/min) ausgedrückt wird. Der sich daraus ergebende Differenzwert (A/min) wird durch den Wandler 30 in ein Signal auf einer ersten Signalleitung 25 umgewandelt. Auf einer weiteren Signalleitung 25 wird ein Signal übertragen, das angibt, ob der Differenzwert bzw. das entsprechende Signal ein positives oder negatives Vorzeichen hat, also ob die neue Fördermenge erhöht oder reduziert werden soll. Die Länge des aus dem Differenzwert gebildeten Signals gibt an, wie groß der Differenzwert ist, also wie groß die zu fördernde Menge sein soll. Mit anderen Worten erfolgt die Signalübertragung durch Pulsweitenmodulation, wobei die Pulsweite eine Funktion der Fördermenge. Wie bereits weiter oben erwähnt, verhält sich die Pulsweite umgekehrt proportional. Das bedeutet, dass ein kurzes Signal eine hohe Fördermenge anzeigt, während ein längeres Signal eine kleinere Fördermenge anzeigt.

Die Signalleitungen 25 bilden den Übergang von der Steuerung 24 der Sendeeinrichtung 11 zur Steuerung 23 des Schragenentleerers 12. Durch die Steuerung 23 werden die durch die Signalleitungen 25 übertragenen Signale ausgewertet. Diese Auswertung beinhaltet zunächst das Wandeln der Signale in eine Größe (A/min) als Summe S₄. Aus dieser Summe S₄ einerseits und einer Fördermenge N₂, die zwei oder mehr Berechnungszyklen zuvor errechnet wurde, also zumindest zeitlich vor der Fördermenge N₁, errechnet der Summierer 32 durch Addition oder Subtraktion eine Differenz, die durch die Summe S₅ dargestellt wird. Die Summe S₅ stellt dann die aktuell benötigte Fördermenge dar. Die Summe S₅ wiederum wird durch den Wandler 33 in eine Führungsgröße F (z.B. in Umdrehung/min = U/min) umgewandelt. Diese Führungsgröße F regelt dann den Motor 22. Durch die Regelung des Motors 22 wird die Transportgeschwindigkeit des Förderelementes 17 geregelt. Eine hohe Transportgeschwindigkeit bedeutet eine hohe Fördermenge bzw. Förderleistung. Eine niedrige Transportgeschwindigkeit bedeutet eine geringe Fördermenge bzw. Förderleistung. Mit anderen Worten wird das Förderelement 17 in seiner Geschwindigkeit derart geregelt, dass es nur die tatsächlich angeforderte Menge an Artikeln 13 liefert, wodurch eine kontinuierliche Zuführung der Artikel 13 an die Sendeeinrichtung 11 gewährleistet ist.

## Patentansprüche

1. Verfahren zum Regeln eines aus Artikeln (13) der Tabak verarbeitenden Industrie gebildeten Förderstroms zwischen mindestens einem Schragenentleerer (12) und mindestens einer über ein Förderelement (17) zum Fördern eines Massenstroms (16) aus Artikeln (13) mit dem oder jedem Schragenentleerer (12) verbundenen Sendeeinrichtung (11), wobei die Sendeeinrichtung (11) mindestens eine zur Aufnahme der Artikel (13) ausgebildete Kammer (18, 19) aufweist und jede Kammer (18, 19) mindestens zwei unabhängig voneinander laufende Sendemodule (21) zum Senden der Artikel (13) an nachgeordnete Vorrichtungen aufweist, wobei jedes Sendemodul (21) eine individuelle Sendeleistung (P₁, P₂,...Pₙ) aufweist, mit den Schritten:
- Überwachen der Füllstandsmenge innerhalb der Sendeeinrichtung (11) mittels Überwachungselementen B1, B2, B3,
- Senden eines Signals an jeden Schragenentleerer (12) zur Regelung der Transportgeschwindigkeit des Förderelementes (17) und damit der Fördermenge (in Artikel/min) in Abhängigkeit der aktuellen Füllstandsmenge innerhalb der Sendeeinrichtung (11), und
- Anpassen der Transportgeschwindigkeit an die gewünschte Füllstandsmenge,
**dadurch gekennzeichnet, dass** die Transportgeschwindigkeit jedes einem Schragenentleerer (12) zugeordneten Förderelementes (17) zusätzlich zur Abhängigkeit der aktuellen Füllstandsmenge innerhalb einer Kammer (18, 19) auch in Abhängigkeit der aus der Summe der einzelnen Sendeleistungen (P₁, P₂,...Pₙ) aller einer Kammer (18, 19) zugeordneten Sendemodule (21) gebildeten Sendeleistung (P_{gesamt}) geregelt wird.

2. Verfahren nach Anspruch 1, **dadurch gekennzeichnet, dass** die Transportgeschwindigkeit des Förderelementes (17) kontinuierlich geregelt wird.

3. Verfahren nach Anspruch 1 oder 2, **dadurch gekennzeichnet, dass** die Füllstandsmenge innerhalb der Sendeeinrichtung (11) an zwei unterschiedlichen Positionen von zwei Überwachungselementen B1 und B2 ermittelt wird, wobei das Überwachungsmittel B1 die maximale Füllstandsmenge bei vollständig gefüllter Sendeeinrichtung (11) und das Überwachungselement B2 eine definierte Füllstandsmenge, die unterhalb der maximalen Füllstandsmenge liegt, überwacht.

4. Verfahren nach einem der Ansprüche 1 bis 3, **dadurch gekennzeichnet, dass** die Füllstandsmenge im Bereich des Einlaufs (15) der Artikel (13) in die Sendeeinrichtung (11) von einem weiteren Überwachungselement B3 überwacht wird.

5. Verfahren nach einem der Ansprüche 1 bis 4, **dadurch gekennzeichnet, dass** die gesamte Sendeleistung (P_{gesamt}) mit einem Korrekturfaktor zur Bildung einer Summe S₂ multipliziert wird.

6. Verfahren nach einem der Ansprüche 1 bis 5, **dadurch gekennzeichnet, dass** die aktuell ermittelte gesamte Sendeleistung (P_{gesamt}) in Abhängigkeit der Füllmenge entsprechend des Zustandes der Überwachungselemente B2 und B3 korrigiert wird.

7. Verfahren nach Anspruch 5 oder 6, **dadurch gekennzeichnet, dass** die Sendeleistung (P_{gesamt}) grundsätzlich um einen vorbestimmten Korrekturfaktor erhöht wird und nur bei Erreichen einer durch das Überwachungselement B2 oder B3 überwachten Füllstandsmenge um einen vorbestimmten Faktor reduziert wird.

8. Verfahren nach einem der Ansprüche 1 bis 7, **dadurch gekennzeichnet, dass** die Zwischensumme S₂ für den Fall, dass das Überwachungselement B1 den maximalen Füllstand anzeigt, mit einem Reduktionsfaktor zur Bildung einer Summe S₃ multipliziert wird.

9. Verfahren nach Anspruch 8, **dadurch gekennzeichnet, dass** der Wert der Summe S₂ für den Fall, dass der maximale Füllstand noch nicht erreicht ist, ohne Multiplikation mit dem Reduktionsfaktor weitergeleitet wird.

10. Verfahren nach Anspruch 8 oder 9, **dadurch gekennzeichnet, dass** ein Differenzwert zwischen der Summe S₂ bzw. S₃ einerseits und einer einen Berechnungszyklus zuvor errechneten Fördermenge N_{I} andererseits gebildet wird.

11. Verfahren nach Anspruch 10, **dadurch gekennzeichnet, dass** aus dem Differenzwert (in Artikeln/min) ein Signal erzeugt wird, das mittels Signalleitungen (25), Datenleitung, über Funk oder dergleichen von der Sendeeinrichtung (11) an den Schragenentleerer (12) übertragen wird.

12. Verfahren nach Anspruch 11, **dadurch gekennzeichnet, dass** zusätzlich zum Differenzwert ein Signal zum Vorzeichen (positiv oder negativ) des Signals übertragen wird.

13. Verfahren nach Anspruch 11 oder 12, **dadurch gekennzeichnet, dass** die Signalübertragung durch Pulsweitenmodulation erfolgt.

14. Verfahren nach Anspruch 13, **dadurch gekennzeichnet, dass** die Pulsweite eine Funktion der Fördermenge ist.

15. Verfahren nach Anspruch 14, **dadurch gekennzeichnet, dass** sich die Pulsweite umgekehrt proportional zur Fördermenge verhält.

16. Verfahren nach einem der Ansprüche 12 bis 15, **dadurch gekennzeichnet, dass** die Signale bezüglich des Differenzwertes und des Vorzeichens wieder in eine absolute Fördermenge (Artikel/min) als Summe S₄ umgewandelt werden.

17. Verfahren nach Anspruch 16, **dadurch gekennzeichnet, dass** aus der Summe S₄ und einer zwei Berechnungszyklen zuvor errechneten Fördermenge N₂ eine Summe S₅ gebildet wird.

18. Verfahren nach Anspruch 17, **dadurch gekennzeichnet, dass** die Summe S₅ in eine Führungsgröße F (in U/min) für einen Antrieb für das Förderelement (17) umgewandelt wird.

19. Anordnung zum Überführen von stabförmigen Artikeln (13) der Tabak verarbeitenden Industrie an nachgeordnete Vorrichtungen, umfassend mindestens einen Schragenentleerer (12), mindestens eine Sendeeinrichtung (11), wobei die Sendeeinrichtung (11) mindestens eine zur Aufnahme der Artikel (13) ausgebildete Kammer (18, 19) aufweist und jeder Kammer (18, 19) mindestens zwei Sendemodule (21) zugeordnet sind, wobei jeder Schragenentleerer (12) und die Sendeeinrichtung (11) über ein Förderelement (17) miteinander verbunden sind und jeweils eine Steuerung (23, 24) zum Regeln jedes Förderelementes (17) aufweisen, **dadurch gekennzeichnet, dass** die Steuerung (24) der Sendeeinrichtung (11) einen Summierer (26) zum Bilden einer Sendeleistung P_{gesamt} aus den einzelnen Sendeleistungen (P₁, P₂,...., Pₙ) aller einer Kammer (18, 19) zugeordneten Sendemodule (21) umfasst.

20. Anordnung nach Anspruch 19, **dadurch gekennzeichnet, dass** die Steuerung (24) der Sendeeinrichtung (11) in Signalflussrichtung des Weiteren mindestens einen ersten Schalter (27), eine zweiten Schalter (28), einen Summierer (29) und einen Wandler (30) aufweist.

21. Anordnung nach Anspruch 19 oder 20, **dadurch gekennzeichnet, dass** die Steuerung (23) des Schragenentleerers (12) in Signalflussrichtung mindestens einen Wandler (31), einen Summierer (32) sowie einen weiteren Wandler (33) aufweist.

22. Anordnung nach einem der Ansprüche 19 bis 21, **dadurch gekennzeichnet, dass** zwei Schragenentleerer (12) vorgesehen sind, die auf gegenüber liegenden Seiten einer Sendeeinrichtung (11) angeordnet sind.

23. Anordnung nach einem der Ansprüche 19 bis 21, **dadurch gekennzeichnet, dass** ein Schragenentleerer (12) mit mindestens zwei Sendeeinrichtungen (11) verbunden ist.

## Claims

1. Method for regulating a conveying stream composed of articles (13) of the tobacco-processing industry between at least one tray discharger (12) and at least one feed device (11) connected to the or each tray discharger (12) by a conveying element (11) for conveying a mass flow (16) consisting of articles (13), wherein the feed device (11) has at least one chamber (18, 19) designed to receive the articles (13), and each chamber (18, 19) has at least two feed units (21) running independently of each other for feeding the articles (13) to subsequent apparatuses, each feed unit (21) has an individual feed rate (P₁, P₂, ... Pₙ), with the steps of:
- monitoring the level within the feed device (11) using monitoring elements B1, B2, B3,
- sending a signal to each tray discharger (12) for regulating the speed of transport of the conveying element (17) and hence the feed rate (in articles/min) dependent on the current level within the feed device (11), and
- adapting the speed of transport to the desired level,
**characterised in that** the speed of transport of each conveying element (17) assigned to a tray discharger (12), in addition to dependence on the current level within a chamber (18, 19), is also regulated dependent on the feed rate (Pₜₒₜₐₗ) formed from the sum of the individual feed rates (P₁, P₂, ... Pₙ) of all feed units (21) assigned to a chamber (18, 19).

2. Method according to claim 1, **characterised in that** the speed of transport of the conveying element (17) is regulated continuously.

3. Method according to claim 1 or 2, **characterised in that** the level within the feed device (11) at two different positions is determined by two monitoring elements B1 and B2, wherein monitoring means B1 monitor the maximum level when the feed device (11) is completely full, and monitoring element B2 monitors a defined level which is below the maximum level.

4. Method according to any of claims 1 to 3, **characterised in that** the level in the region of the inlet (15) of the articles (13) into the feed device (11) is monitored by a further monitoring element B3.

5. Method according to any of claims 1 to 4, **characterised in that** the total feed rate (Pₜₒₜₐₗ) is multiplied by a correction factor for forming a sum S₂.

6. Method according to any of claims 1 to 5, **characterised in that** the currently determined total feed rate (Pₜₒₜₐₗ) is corrected according to the state of the monitoring elements B2 and B3 dependent on the level.

7. Method according to claim 5 or 6, **characterised in that** the feed rate (Pₜₒₜₐₗ) is basically increased by a predetermined correction factor, and decreased by a predetermined factor only on reaching a level monitored by the monitoring element B2 or B3.

8. Method according to any of claims 1 to 7, **characterised in that**, in the event that the monitoring element B1 indicates the maximum level, the subtotal S₂ is multiplied by a reduction factor to form a sum S₃.

9. Method according to claim 8, **characterised in that**, in the event that the maximum level is not yet reached, the value of the sum S₂ is passed on without multiplication by the reduction factor.

10. Method according to claim 8 or 9, **characterised in that** a difference value is formed between the sum S₂ or S₃, on the one hand, and a feed rate N₁ calculated one calculation cycle before, on the other hand.

11. Method according to claim 10, **characterised in that** from the difference value (in articles/min) is generated a signal which is transmitted by means of signal wires (25), data line, by radio or the like from the feed device (11) to the tray discharger (12).

12. Method according to claim 11, **characterised in that**, in addition to the difference value, a signal for the preceding sign (positive or negative) of the signal is transmitted.

13. Method according to claim 11 or 12, **characterised in that** signal transmission takes place by pulse-width modulation.

14. Method according to claim 13, **characterised in that** the pulse width is a function of the feed rate.

15. Method according to claim 14, **characterised in that** the pulse width behaves in inverse proportion to the feed rate.

16. Method according to any of claims 12 to 15, **characterised in that** the signals relating to the difference value and the preceding sign are again converted to an absolute feed rate (articles/min) as the sum S₄.

17. Method according to claim 16, **characterised in that** from the sum S₄ and a feed rate N₂ calculated two calculation cycles before is formed a sum S₅.

18. Method according to claim 17, **characterised in that** the sum S₅ is converted to a reference variable F (in rpm) for a drive for the conveying element (17).

19. Arrangement for transferring rod-shaped articles (13) of the tobacco-processing industry to subsequent apparatuses, including at least one tray discharger (12), at least one feed device (11), wherein the feed device (11) has at least one chamber (18, 19) designed to receive the articles (13) and each chamber (18, 19) is assigned at least two feed units (21), each tray discharger (12) and the feed device (11) being connected to each other by a conveying element (17) and each comprising a control system (23, 24) for regulating each conveying element (17), **characterised in that** the control system (24) of the feed device (11) includes an adder (26) for forming a feed rate Pₜₒₜₐₗ from the individual feed rates (P₁, P₂, ..., Pₙ) of all feed units (21) assigned to a chamber (18, 19).

20. Arrangement according to claim 19, **characterised in that** the control system (24) of the feed device (11) in the signal flow direction further has at least one first switch (27), a second switch (28), an adder (29) and a converter (30).

21. Arrangement according to claim 19 or 20, **characterised in that** the control system (23) of the tray discharger (12) in the signal flow direction has at least one converter (31), an adder (32) and a further converter (33).

22. Arrangement according to any of claims 19 to 21, **characterised in that** there are provided two tray dischargers (12) which are arranged on opposite sides of a feed device (11).

23. Arrangement according to any of claims 19 to 21, **characterised in that** a tray discharger (12) is connected to at least two feed devices (11).

## Revendications

1. Procédé pour régler un flux de transport formé d'articles (13) de l'industrie de transformation du tabac entre au moins un dispositif de vidage de boîtes (12) et au moins un dispositif d'envoi (11) relié au dispositif de vidage de boîtes (12) ou à chaque dispositif de vidage de boîtes (12) par l'intermédiaire d'un élément transporteur (17) destiné à transporter un flux en vrac (16) formé d'articles (13), dans lequel le dispositif d'envoi (11) présente au moins une chambre (18, 19) configurée pour la réception des articles (13) et chaque chambre (18,19) présente au moins deux modules d'envoi (21) travaillant indépendamment l'un de l'autre, destinés à envoyer les articles (13) à des appareils placés en aval, chaque module d'envoi (21) présentant une capacité d'envoi individuelle (P₁, P₂,...Pₙ), ledit procédé comportant les étapes suivantes :
- surveillance de la quantité de remplissage dans le dispositif d'envoi (11) au moyen d'éléments de surveillance B1, B2, B3,
- envoi d'un signal à chaque dispositif de vidage de boîtes (12) pour la régulation de la vitesse de transport de l'élément transporteur (17), et donc de la quantité de transport (en articles/minute) en fonction de la quantité de remplissage actuelle à l'intérieur du dispositif d'envoi (11), et
- adaptation de la vitesse de transport à la quantité de remplissage souhaitée,
**caractérisé en ce que** la vitesse de transport de chaque élément transporteur (17) associé à un dispositif de vidage de boîtes (12) est réglée, non seulement en fonction de la quantité de remplissage actuelle dans une chambre (18, 19), mais aussi en fonction de la capacité d'envoi (Pₜₒₜₐₗₑ) résultant de la somme des capacités d'envoi individuelles (P₁, P₂,...Pₙ) de tous les modules d'envoi (21) associés à une chambre (18, 19).

2. Procédé selon la revendication 1, **caractérisé en ce que** la vitesse de transport de l'élément transporteur (17) est réglée par variation continue.

3. Procédé selon la revendication 1 ou 2, **caractérisé en ce que** la quantité de remplissage dans le dispositif d'envoi (11) est déterminée en deux positions différentes de deux éléments de surveillance B1 et B2, le moyen de surveillance B1 surveillant la quantité de remplissage maximale lorsque le dispositif d'envoi (11) est entièrement rempli et l'élément de surveillance B2 surveillant une quantité de remplissage définie, qui est inférieure à la quantité de remplissage maximale.

4. Procédé selon l'une des revendications 1 à 3, **caractérisé en ce que** la quantité de remplissage dans la région de l'entrée (15) des articles (13) dans le dispositif d'envoi (11) est surveillée par un autre élément de surveillance B3.

5. Procédé selon l'une des revendications 1 à 4, **caractérisé en ce que** la capacité d'envoi totale (Pₜₒₜₐₗₑ) est multipliée par un coefficient de correction pour former une somme S₂.

6. Procédé selon l'une des revendications 1 à 5, **caractérisé en ce que** la capacité d'envoi totale actuellement déterminée (Pₜₒₜₐₗₑ) est corrigée en fonction de la quantité de remplissage d'après l'état des éléments de surveillance B2 et B3.

7. Procédé selon la revendication 5 ou 6, **caractérisé en ce que** la capacité d'envoi (Pₜₒₜₐₗₑ) est en principe augmentée par application d'un coefficient de correction prédéterminé et n'est diminuée par application d'un coefficient prédéterminé que lorsqu'est atteinte une quantité de remplissage surveillée par l'élément de surveillance B2 ou B3.

8. Procédé selon l'une des revendications 1 à 7, **caractérisé en ce que**, lorsque l'élément de surveillance B1 signale la quantité de remplissage maximale, la somme intermédiaire S₂ est multipliée par un coefficient de réduction, pour donner une somme S₃.

9. Procédé selon la revendication 8, **caractérisé en ce que**, lorsque le remplissage maximal n'est pas encore atteint, la valeur de la somme S₂ est transmise sans multiplication par le coefficient de réduction.

10. Procédé selon la revendication 8 ou 9 **caractérisé en ce qu'**on forme une valeur différentielle entre la somme S₂ ou S₃, d'une part, et une quantité de transport N₁, calculée un cycle de calcul auparavant, d'autre part.

11. Procédé selon la revendication 10, **caractérisé en ce qu'**est émis, à partir de la valeur différentielle (en articles/minute), un signal qui est transmis du dispositif d'envoi (11) au dispositif de vidage de boîtes (12) au moyen de lignes de signaux (25), d'une ligne de données, par radio ou analogue,

12. Procédé selon la revendication 11, **caractérisé en ce que**, en plus de la valeur différentielle, on transmet un signal donnant le signe (positif ou négatif) du signal.

13. Procédé selon la revendication 11 ou 12, **caractérisé en ce que** la transmission des signaux s'effectue par modulation de la largeur des impulsions.

14. Procédé selon la revendication 13, **caractérisé en ce que** la largeur des impulsions est fonction de la quantité de transport.

15. Procédé selon la revendication 14, **caractérisé en ce que** la largeur des impulsions varie de façon inversement proportionnelle à la quantité de transport.

16. Procédé selon l'une des revendications 12 à 15, **caractérisé en ce que** les signaux relatifs à la valeur différentielle et au signe sont de nouveau convertis en une quantité de transport absolue (articles/minute) constituant une somme S₄.

17. Procédé selon la revendication 16, **caractérisé en ce que**, à partir de la somme S₄ et d'une quantité de transport N₂, calculée deux cycles de calcul auparavant, on forme une somme S₅.

18. Procédé selon la revendication 17, **caractérisé en ce que** la somme S₅ est convertie en une grandeur de référence F (en tours/minute) pour un entraînement de l'élément transporteur (17).

19. Dispositif pour le transfert d'articles en forme de tiges (13) de l'industrie de transformation du tabac à des dispositifs placés en aval, comprenant au moins un dispositif de vidage de boîtes (12), au moins un dispositif d'envoi (11), le dispositif d'envoi (11) comprenant au moins une chambre (18,19) configurée pour la réception des articles (13), et à chaque chambre (18, 19) étant associés au moins deux modules d'envoi (21), chaque dispositif de vidage de boîtes (12) et le dispositif d'envoi (11) étant reliés entre eux par un élément transporteur (17) et présentant chacun une commande (23, 24) pour le réglage de chaque élément transporteur (17), **caractérisé en ce que** la commande (24) du dispositif d'envoi (11) comprend un additionneur (26) servant à calculer une capacité d'envoi Pₜₒₜₐₗₑ à partir des capacités d'envoi individuelles (P₁, P₂,...Pₙ) de tous les modules d'envoi (21) associés à une chambre (18, 19).

20. Dispositif selon la revendication 19, **caractérisé en ce que** la commande (24) du dispositif d'envoi (11) présente en outre, dans le sens du flux de signaux, au moins un premier commutateur (27), un deuxième commutateur (28), un additionneur (29) et un convertisseur (30).

21. Dispositif selon la revendication 19 ou 20, **caractérisé en ce que** la commande (23) du dispositif de vidage de boîtes (12) présente, dans le sens du flux de signaux, au moins un convertisseur (31), un additionneur (32), ainsi qu'un autre convertisseur (33).

22. Dispositif selon l'une des revendications 19 à 21, **caractérisé en ce qu'**il est prévu deux dispositifs de vidage de boîtes (12) qui sont disposés sur des côtés opposés d'un dispositif d'envoi (11).

23. Dispositif selon l'une des revendications 19 à 21, **caractérisé en ce qu'**un dispositif de vidage de boîtes (12) est relié à au moins deux dispositifs d'envoi (11).
